# EUROPEAN PATENT APPLICATION

(11) **EP 3 093 454 A1**
(43) Date of publication of application: **16.11.2016**
(21) Application number: 16168719.9
(22) Date of filing: 09.05.2016
(51) Int. Cl.: F01D 25/16, F02C 7/20, F02C 7/36

(54) **SYSTEM FOR SUPPORTING ROTOR SHAFTS OF AN INDIRECT DRIVE TURBOFAN ENGINE**

(30) Priority: 13.05.2015 US 201514711047
(71) Applicant: General Electric Company, Schenectady, NY 12345 (US)
(72) Inventor: GLYNN, Christopher Charles, Cincinnati, OH Ohio 45215 (US); KUHNE, Craig Miller, Cincinnati, OH Ohio 45215 (US); MILLER, Brandon Waye, Cincinnati, OH Ohio 45215 (US); ZATORSKI, Darek Tomasz, Cincinnati, OH Ohio 45215 (US)
(74) Representative: Williams, Andrew Richard

(57) **Abstract**

In one aspect the present subject matter is directed to a system for supporting shafts of an indirect-drive turbofan engine (10). The system includes a fan frame assembly (200) that is coaxially aligned with a centerline of the turbofan engine (10) and positioned forward of a reduction gear (40) that couples a low pressure rotor shaft (36) to a fan shaft (38). A compressor frame assembly (300) is aligned with the centerline aft of the reduction gear (40) and is positioned axially between a low pressure compressor (22) and a high pressure compressor (24) of the turbofan engine (10). A turbine frame assembly (400) is coaxially aligned with the centerline and is positioned axially between a high pressure turbine (28) and a low pressure turbine (30) of the turbofan engine (10). The turbine frame assembly (400) rotatably supports an aft end portion of a high pressure rotor shaft (34) and an aft end portion of the low pressure rotor shaft (36).

## Description

### FIELD OF THE INVENTION

The present subject matter relates generally to an indirect-drive turbofan engine. More particularly, the present subject matter relates to a system for supporting a high pressure rotor shaft and a low pressure rotor shaft of a gas turbine engine portion of the turbofan engine.

### BACKGROUND OF THE INVENTION

A geared turbofan engine generally includes a fan section and a core gas turbine engine. The gas turbine engine includes, in serial flow order, a low pressure compressor, a high pressure compressor, a combustion section, a high pressure turbine and a low pressure turbine. A high pressure shaft couples the high pressure compressor to the high pressure turbine. A low pressure shaft extends coaxially within the high pressure shaft and couples the low pressure compressor to the low pressure turbine.

The fan section includes a plurality of fan blades coupled to a fan shaft and disposed upstream from an inlet of the low pressure compressor. The fan shaft is coupled to the low pressure shaft via a gearbox. In particular configurations, an outer casing or nacelle circumscribes the fan blades and at least a portion of the gas turbine engine. A bypass air passage is defined between an outer casing of the gas turbine engine and the nacelle.

In operation, air flows across the fan blades and a portion of the air flows into the inlet of the low pressure compressor while the remainder of the air is routed through the bypass passage. The air flowing though the inlet is progressively compressed as it flows through the low pressure compressor and the high pressure compressor, thus providing a highly compressed air to the combustion section. Fuel is mixed with the compressed air and burned within the combustion section to provide combustion gases. The combustion gases are routed from the combustion section through the high pressure turbine, thus rotatably driving the high pressure compressor via the high pressure shaft. The combustion gases then flow aft through the low pressure turbine, thereby rotatably driving the low pressure compressor and the fan blades via the low pressure shaft and the fan shaft. The rotational speed of the fan blades may be modified via the gearbox. The combustion gases are exhausted from the gas turbine via an exhaust nozzle, thus providing a portion of total thrust of the turbofan engine. The largest portion of the total thrust is provided by the air flowing from the bypass passage.

Engine frames are used to support the high pressure and low pressure shafts and/or to couple the gas turbine engine to a mounting structure such as a wing of an aircraft via a pylon. In addition, the engine frames may carry various bearings for rotatably supporting the high pressure and low pressure shafts. Conventional geared turbofan engines have a fan frame, a mid-frame or compressor front frame, an aft frame or turbine center frame and an outlet guide vane frame or a turbine rear frame. Each engine frame adds weight, length, cost and complexity to the turbo fan engine. Consequently, an improved system for supporting high pressure and low pressure rotor shafts of the gas turbine portion of the turbofan engine would be useful in the turbofan engine industry.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to a system for supporting shafts of an indirect-drive turbofan engine. The system includes a fan frame assembly that is coaxially aligned with a centerline of the turbofan engine and positioned forward of a reduction gear that couples a low pressure rotor shaft to a fan shaft. A compressor frame assembly is coaxially aligned with the centerline aft of the reduction gear and is positioned axially between a low pressure compressor and a high pressure compressor of the turbofan engine. A turbine frame assembly is coaxially aligned with the centerline and is positioned axially between a high pressure turbine and a low pressure turbine of the turbofan engine. The turbine frame assembly rotatably supports an aft end portion of a high pressure rotor shaft and an aft end portion of the low pressure rotor shaft.

Another aspect of the present subject matter is directed to an indirect-drive turbofan jet engine. The indirect-drive turbofan jet engine includes a fan section includes a plurality of fan blades coupled to a fan shaft and a gas turbine engine. The gas turbine engine includes, in serial flow order, a low pressure compressor, a high pressure compressor, a combustion section, a high pressure turbine and a low pressure turbine. The gas turbine also includes a high pressure rotor shaft that couples the high pressure compressor to the high pressure turbine, a low pressure rotor shaft that couples the low pressure compressor to the low pressure turbine, and a reduction gear that couples a forward end portion of the low pressure rotor shaft to the fan shaft. A fan frame assembly is positioned forward of the reduction gear. A compressor frame assembly is positioned aft of the reduction gear and positioned axially between the low pressure compressor and the high pressure compressor. A turbine frame assembly is positioned axially between the high pressure turbine and the low pressure turbine. The turbine frame assembly rotatably supports an aft end portion of the high pressure rotor shaft and an aft end portion of the low pressure rotor shaft.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic cross-sectional view of an exemplary geared or indirect-drive turbofan jet engine as may incorporate various embodiments of the present invention;
FIG. 2 is a longitudinal, cross sectional view of an exemplary embodiment of a geared or indirect-drive turbofan jet engine with a system for supporting shafts and/or for support a gas turbine engine portion of the turbofan jet engine according to various embodiments of the present invention;
FIG. 3 is an enlarged view of an exemplary fan frame assembly as shown in FIG. 2, according to at least one embodiment of the present invention;
FIG. 4 is an enlarged view of an exemplary compressor frame assembly as shown in FIG. 2, according to at least one embodiment of the present invention;
FIG. 5 is an enlarged view of an exemplary turbine frame assembly as shown in FIG. 2, according to at least one embodiment of the present invention; and
FIG. 6 is an enlarged view of an exemplary turbine frame assembly as shown in FIG. 2, according to at least one embodiment of the present invention.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative flow direction with respect to fluid flow in a fluid pathway. For example, "upstream" refers to the flow direction from which the fluid flows, and "downstream" refers to the flow direction to which the fluid flows.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

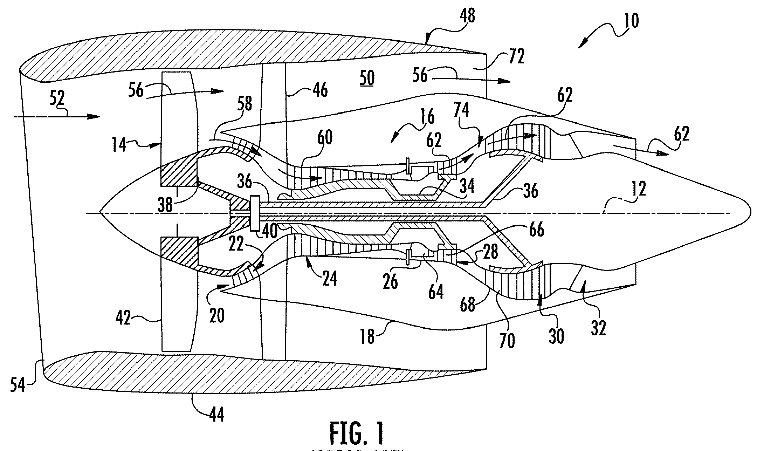

Referring now to the drawings, wherein identical numerals indicate the same elements throughout the figures, FIG. 1 is a schematic cross-sectional side view of an exemplary geared or indirect-drive turbofan jet engine 10 herein referred to as "turbofan 10" as may incorporate various embodiments of the present invention. As shown in FIG. 1, the turbofan 10 has a longitudinal or axial centerline axis 12 that extends therethrough for reference purposes. In general, the turbofan 10 may include a fan section 14 and a core turbine engine or gas turbine engine 16 disposed downstream from the fan section 14.

The core turbine engine 16 may generally include a substantially tubular outer casing 18 that defines an annular inlet 20. The outer casing 18 encases or at least partially forms, in serial flow relationship, a compressor section having a booster or low pressure (LP) compressor 22, a high pressure (HP) compressor 24, a combustion section 26, a turbine section including a high pressure (HP) turbine 28, a low pressure (LP) turbine 30 and a jet exhaust nozzle section 32. A high pressure (HP) rotor shaft 34 drivingly connects the HP turbine 28 to the HP compressor 24. A low pressure (LP) rotor shaft 36 drivingly connects the LP turbine 30 to the LP compressor 22. The LP rotor shaft 36 may also be connected to a fan shaft 38 of the fan section 14. In particular embodiments, as shown in FIG. 1, the LP rotor shaft 36 may be connected to the fan rotor shaft or fan shaft 38 via a reduction gear 40 such as in an indirect-drive or geared-drive configuration.

As shown in FIG. 1, the fan section 14 includes a plurality of fan blades 42 that are coupled to and that extend radially outwardly from the fan shaft 38. An annular fan casing or nacelle 44 circumferentially surrounds the fan section 14 and/or at least a portion of the core turbine engine 16. It should be appreciated by those of ordinary skill in the art that the nacelle 44 may be configured to be supported relative to the core turbine engine 16 by a plurality of circumferentially-spaced outlet guide vanes or struts 46. Moreover, a downstream section 48 of the nacelle 44 may extend over an outer portion of the core turbine engine 16 so as to define a bypass airflow passage 50 therebetween.

During operation of the turbofan 10, a volume of air 52 enters the turbofan 10 through an associated inlet 54 of the nacelle 44 and/or fan section 14. As the volume of air 52 passes across the fan blades 42 a first portion of the air 52 as indicated by arrows 56 is directed or routed into the bypass airflow passage 50 and a second portion of the air 52 as indicated by arrow 58 is directed or routed into the LP compressor 22. The ratio between the first portion of air 56 and the second portion of air 58 is commonly known as bypass ratio. The pressure of the second portion of air 58 is then increased as it is routed towards the high pressure HP compressor 24 (as indicated by arrow 60). The second portion of air 60 is routed from the HP compressor 24 into the combustion section 26 where it is mixed with fuel and burned to provide combustion gases 62.

The combustion gases 62 are routed through the HP turbine 28 where a portion of thermal and/or kinetic energy from the combustion gases 62 is extracted via sequential stages of HP turbine stator vanes 64 that are coupled to the outer casing 18 and HP turbine rotor blades 66 that are coupled to the HP rotor shaft 34, thus causing the HP rotor shaft 34 to rotate, thereby supporting operation of the HP compressor 24. The combustion gases 62 are then routed through the LP turbine 30 where a second portion of thermal and kinetic energy is extracted from the combustion gases 62 via sequential stages of LP turbine stator vanes 68 that are coupled to the outer casing 18 and LP turbine rotor blades 70 that are coupled to the LP rotor shaft 36, thus causing the LP rotor shaft 36 to rotate, thereby supporting operation of the LP compressor 22 and/or rotation of the fan shaft 38.

The combustion gases 62 are then routed through the jet exhaust nozzle section 32 of the core turbine engine 16 to provide propulsive thrust. Simultaneously, the pressure of the first portion of air 56 is substantially increased as the first portion of air 56 is routed through the bypass airflow passage 50 before it is exhausted from a fan nozzle exhaust section 72 of the turbofan 10, thus providing propulsive thrust. The HP turbine 28, the LP turbine 30 and the jet exhaust nozzle section 32 at least partially define a hot gas path 74 for routing the combustion gases 62 through the core turbine engine 16.

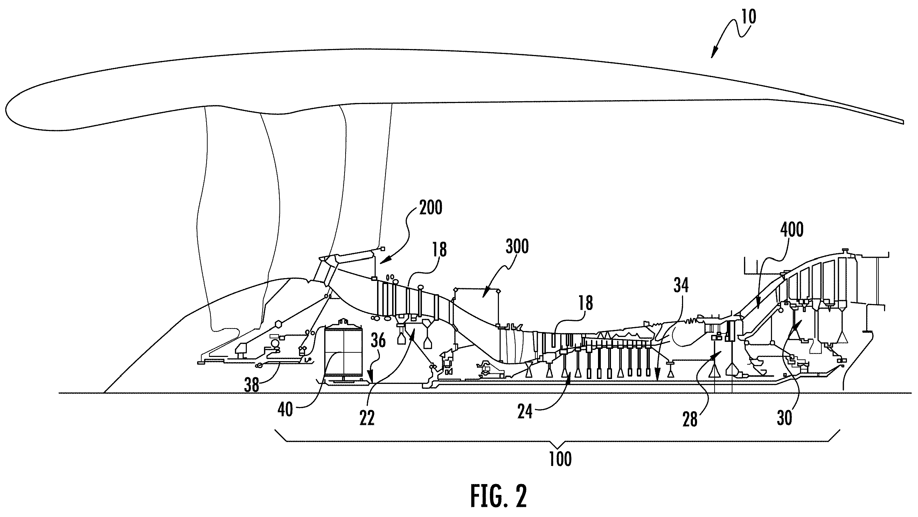

FIG. 2 provides a longitudinal, cross sectional view of an exemplary embodiment of a geared or indirect-drive turbofan jet engine 10 with a system 100 for supporting the HP rotor shaft 34, the LP rotor shaft 36 and the fan shaft 38, herein referred to as "system 100", according to various embodiments of the present invention. The various outer casings that surround or encase the gas turbine engine 10 and various engine frames collectively constitute what is known in the art as the engine carcass or structure. As shown in FIG. 2, the system 100 includes a forward or fan frame assembly 200, an intermediate or compressor frame assembly 300 and an aft or turbine frame assembly 400. The system 100 rotatably and/or structurally supports the HP rotor shaft 34 and the LP rotor shaft 36 of the turbofan 10. The fan frame assembly 200, the compressor frame assembly 300 and the turbine frame assembly 400 may be interconnected via outer casing 18. The system 100 may provide a means for coupling the turbofan 10 to an aircraft (not shown). For example, at least one of the fan frame assembly 200, compressor frame assembly 300 or the turbine frame assembly 400 may be configured to connect to an aircraft wing, fuselage or tail section.

As shown in FIG. 2, the fan frame assembly 200 is positioned upstream from the LP compressor 22 and may generally provide structural support for the fan section 14 and/or the LP compressor 22. The compressor frame assembly 300 is positioned axially between the LP compressor 22 and the HP compressor 24 and may generally provide structural support thereto. The turbine frame assembly 400 is positioned axially between the HP turbine 28 and the LP turbine 30. The turbine frame assembly 400 provides structural support for both the HP turbine 28 and the LP turbine 30. The turbine frame assembly 400 solely supports the LP turbine 30.

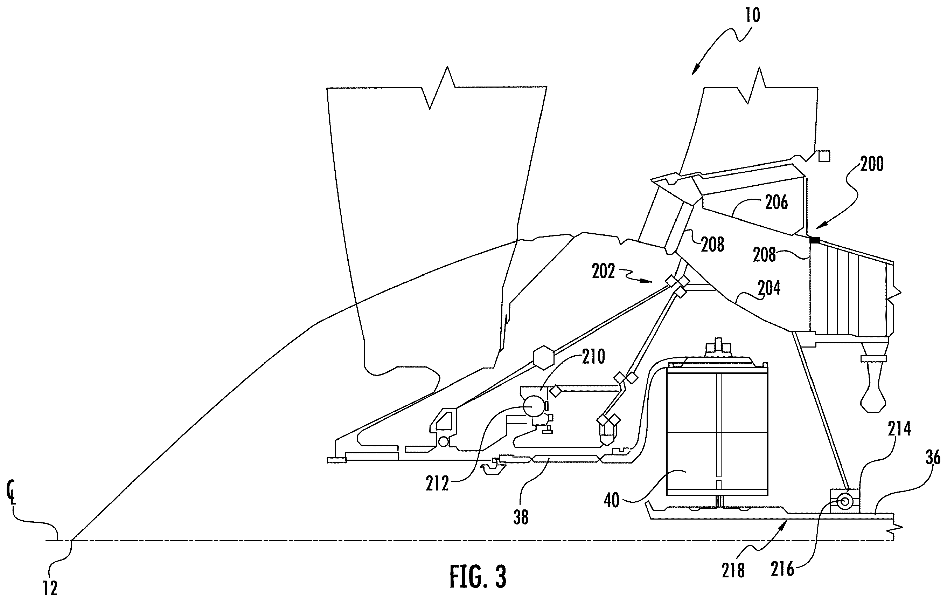

FIG. 3 provides an enlarged view of the fan frame assembly 200 as shown in FIG. 2, according to at least one embodiment of the present invention. As shown in FIG. 3, the fan frame assembly 200 includes an annular frame structure 202 coaxially aligned with centerline 12. The frame structure 202 may include an inner ring structure 204, an outer ring structure 206 and a plurality of struts or radial members 208 that extend radially between the inner and outer ring structures 204, 206 and that are positioned downstream from the inlet 20 to the LP compressor 22. The struts 208 may be aerodynamically shaped so as to reduce flow losses. The fan frame assembly 200 may also include one or more bearing support members or structures. For example, in one embodiment, the fan frame assembly 200 includes a fan shaft bearing support member or structure 210 that is fixedly attached to the frame structure 202. In particular embodiments, as shown in FIG. 3, a bearing 212 is mounted within the fan shaft bearing support 210 and is rotatably engaged with the fan shaft 38. The bearing 212 may be a thrust bearing or a roller type bearing. The bearing 212 supports the fan shaft 38 axially and radially.

In particular embodiments, as shown in FIG. 3, the fan frame assembly 200 may include a LP rotor shaft bearing support member or structure 214 that is defined or positioned aft of the gearbox 40 and that is fixedly attached to the frame structure 202. In particular embodiments, as shown in FIG. 3, a bearing 216 is mounted within the LP rotor shaft bearing support structure 214 and is rotatably engaged with a forward portion 218 of the LP rotor shaft 36. The bearing 216 may be a thrust bearing or a roller type bearing. The bearing 216 may support the forward portion 218 of the LP rotor shaft 36 axially and/or radially. In this embodiment, either the LP compressor 22 or the fan shaft 38 may remain connected and/or in torque communication with the LP turbine 30 to prevent an over-speed condition such as may result from a LP rotor shaft failure.

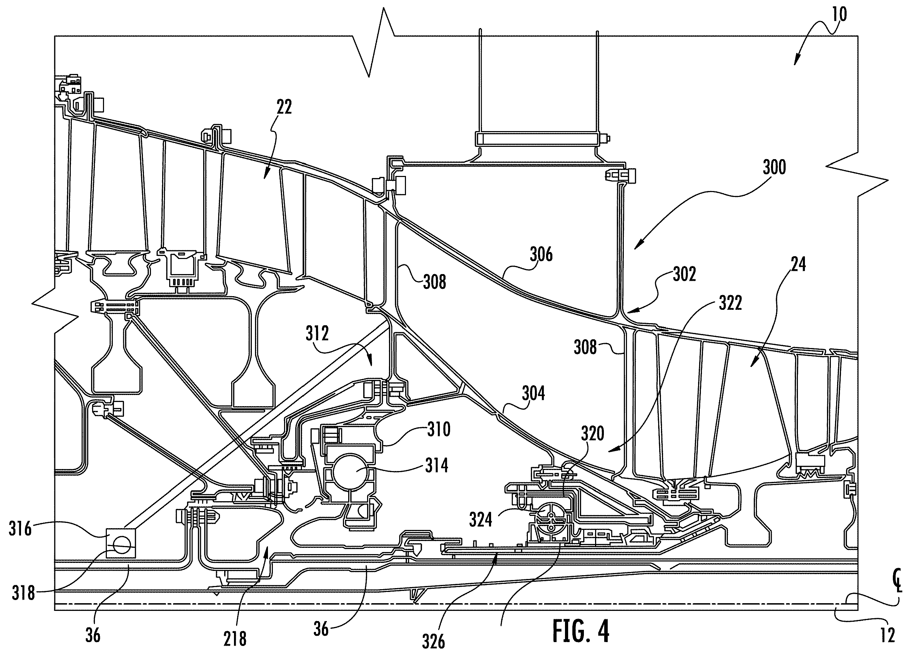

FIG. 4 provides an enlarged view of the compressor frame assembly 300 as shown in FIG. 2, according to at least one embodiment of the present invention. As shown in FIG. 4, the compressor frame assembly 300 includes an annular frame structure 302 coaxially aligned with centerline 12. The frame structure 302 may include an inner ring structure 304, an outer ring structure 306 and a plurality of struts or radial members 308 that extend radially between the inner and outer ring structures 304, 306 and that are positioned downstream from the LP compressor 22 and upstream from the HP compressor 24. The struts 308 may be aerodynamically shaped so as to reduce flow losses within the gas turbine engine 16.

The compressor frame assembly 300 includes one or more bearing support members or structures. In one embodiment, the compressor frame assembly 300 includes a LP rotor shaft bearing support structure 310. The LP rotor shaft bearing support structure 310 may be mounted to and/or fixedly attached to a forward portion 312 of the frame structure 302. In particular embodiments, as shown in FIG. 4, a bearing 314 is mounted within the LP rotor shaft bearing support structure 310 and is rotatably engaged with the forward portion 218 of the LP rotor shaft 36. The bearing 314 may be a thrust bearing or a roller type bearing. In particular embodiments, the bearing 314 is a thrust or ball bearing. In particular embodiments, the bearing 314 is a roller bearing. The bearing 314 supports the forward portion 218 of the LP rotor shaft 38 axially and/or radially.

In one embodiment, as shown in FIG. 4, bearing 314 is a thrust bearing and the compressor frame assembly 300 includes a second LP rotor shaft bearing support structure 316. The second LP rotor shaft bearing support structure 316 may be mounted to and/or fixedly attached to the forward portion 312 of the frame structure 302 axially forward of the LP rotor shaft bearing support structure 310. In particular embodiments, as shown in FIG. 4, a bearing 318 is mounted within the second LP rotor shaft bearing support structure 316 and is rotatably engaged with the forward portion 218 of the LP rotor shaft 36. In this configuration, bearing 318 is a roller type bearing, thus radially supporting the forward portion 218 of the LP rotor shaft 36.

In various embodiments, as shown in FIG. 4, the compressor frame assembly 300 includes a HP rotor shaft bearing support structure 320. The HP rotor shaft bearing support structure 320 may be mounted to and/or fixedly attached at or adjacent to an aft portion 322 of the frame structure 302. In particular embodiments, as shown in FIG. 4, a bearing 324 is mounted within the HP rotor shaft bearing support structure 320 and is rotatably engaged with a forward portion 326 of the HP rotor shaft 34. The bearing 324 may be a thrust bearing or a roller type bearing. In particular embodiments, the bearing 324 is a thrust or ball bearing. In particular embodiments, the bearing 324 is a roller bearing. The bearing 324 supports the forward portion 326 of the HP rotor shaft 34 axially and/or radially.

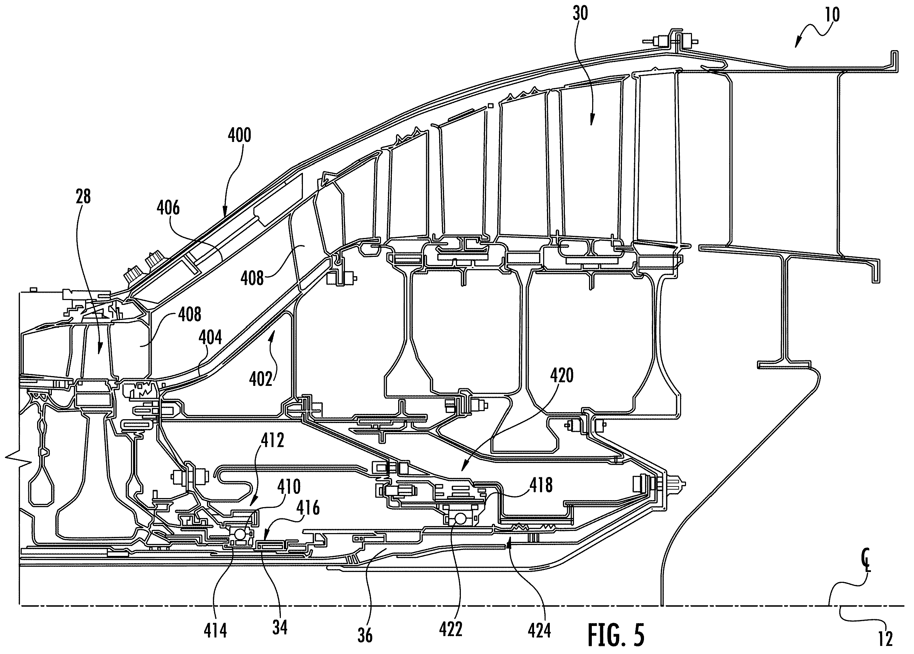

FIG. 5 provides an enlarged view of the turbine frame assembly 400 as shown in FIG. 2, according to at least one embodiment of the present invention. As shown in FIG. 5, the turbine frame assembly 400 includes an annular frame structure 402 coaxially aligned with centerline 12. The frame structure 402 may include an inner ring structure 404, an outer ring structure 406 and a plurality of struts or radial members 408 that extend radially between the inner and outer ring structures 404, 406 and that are positioned downstream from the HP turbine and upstream from the LP turbine 30. The struts 408 may be aerodynamically shaped so as to reduce flow losses between the HP and LP turbines 28, 30.

In various embodiments, the turbine frame assembly 400 includes one or more bearing support members or structures. In various embodiments, as shown in FIG. 5, the turbine frame assembly 400 includes an HP rotor shaft bearing support structure 410. The HP rotor shaft bearing support structure 410 is mounted to a forward portion 412 of the frame structure 402. In particular embodiments, a bearing 414 is mounted within the HP rotor shaft bearing support structure 410 and is rotatably engaged with an aft portion 416 of the HP rotor shaft 34. In particular embodiments, the bearing 414 is a roller type bearing. The bearing 414 supports the aft portion 416 of the HP rotor shaft 34 radially.

In various embodiments, as shown in FIG. 5, the turbine frame assembly 400 includes a LP rotor shaft bearing support structure 418. The LP rotor shaft bearing support structure 418 is mounted towards or adjacent to an aft portion 420 of the frame structure 402. In particular embodiments, as shown in FIG. 5, a bearing 422 is mounted within the LP rotor shaft bearing support structure 418 and is rotatably engaged with an aft portion 424 of the LP rotor shaft 36. In particular embodiments, the bearing 422 is a roller type bearing and supports the aft portion 424 of the LP rotor shaft 36 radially.

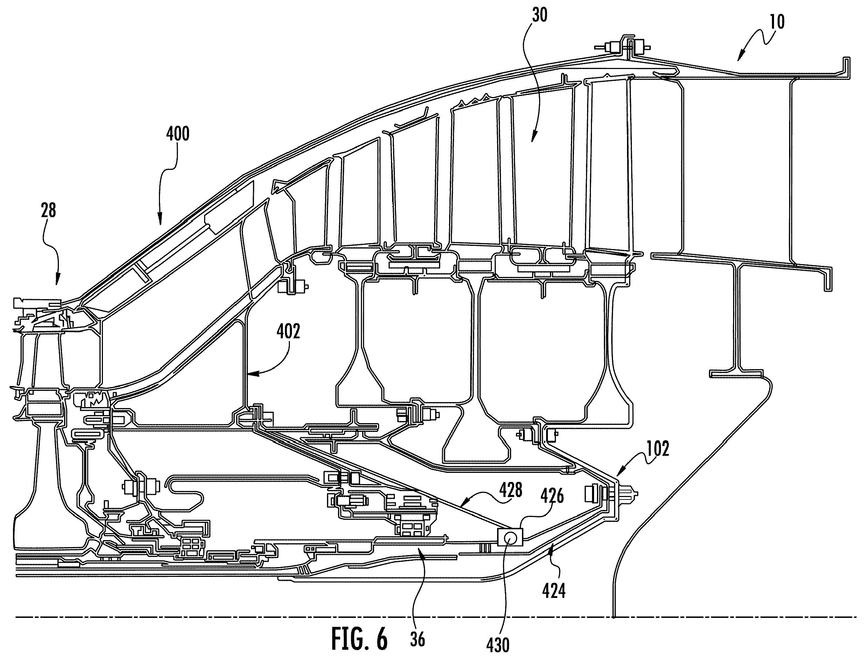

FIG. 6 provides an enlarged view of the turbine frame assembly 400 as shown in FIG. 2, according to at least one embodiment of the present invention. As shown in FIG. 6, the engine frame system 100 may also include a conical shaft extension 102 that is connected to the aft portion 424 of the LP rotor shaft 36. In particular embodiments, the turbine frame assembly 400 includes a second LP rotor shaft bearing support structure 426 mounted to a portion 428 of the frame structure 402 aft of LP rotor shaft bearing support structure 418. In particular embodiments, a bearing 430 is mounted within the second LP rotor shaft bearing support structure 426 and is rotatably engaged with the conical shaft extension 102 and/or the aft portion 424 of the LP rotor shaft 36. The bearing 430 is a roller type bearing. This creates a fixed-fixed end condition for the LP rotor shaft 36. As a result, a 1^{st} flex vibrational natural frequency of the LP rotor shaft 36 is increased. The bearing 430 supports the conical shaft extension 102 and/or the aft portion 416 of the LP rotor shaft 36 radially.

The embodiments as described herein and as illustrated in FIGS. 2-6, provide various technical benefits over existing geared or indirect-drive bypass turbofan type jet engines. For example, existing high bypass geared turbofan engines have at least 4 structural frames. These frames add complexity, weight, and cost and may be an aerodynamic detriment to the hot gas flow path. By reducing the overall engine frame system 100 down to three frames as provided herein, cost and complexity may be reduced. In addition or in the alternative, reducing the overall engine frame system 100 down to three frames may also facilitate packaging of a higher diameter LP turbine, thus improving overall performance of the turbofan 100.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A system for supporting shafts of an indirect-drive turbofan engine, the system comprising:
   a fan frame assembly coaxially aligned with a centerline of the turbofan engine and positioned forward of a reduction gear of the turbofan engine, wherein the reduction gear couples a low pressure rotor shaft to a fan shaft;
   a compressor frame assembly coaxially aligned with the centerline aft of the reduction gear and positioned axially between a low pressure compressor and a high pressure compressor of the turbofan engine; and
   a turbine frame assembly coaxially aligned with the centerline and positioned axially between a high pressure turbine and a low pressure turbine of the turbofan engine;
   wherein the turbine frame assembly rotatably supports an aft end portion of a high pressure rotor shaft and an aft end portion of the low pressure rotor shaft.
2. The system as in clause 1, wherein the fan frame assembly comprises at least one fan shaft bearing support structure and a bearing rotatably engaged with the fan shaft, wherein the bearing is one of a thrust bearing or a roller bearing.
3. The system as in any preceding clause, wherein the compressor frame assembly includes a low pressure rotor shaft bearing support structure and a bearing rotatably engaged with a forward portion of the low pressure rotor shaft aft of the reduction gear, wherein the bearing is one of a thrust bearing or a roller bearing.
4. The system as in any preceding clause, wherein the compressor frame assembly includes a high pressure rotor shaft bearing support structure and a bearing rotatably engaged with a forward portion of the high pressure rotor shaft, wherein the bearing is one of a thrust bearing or a roller bearing.
5. The system as in any preceding clause, wherein the turbine frame assembly includes a high pressure rotor shaft bearing support structure and a bearing rotatably engaged with an aft end portion of the high pressure rotor shaft, wherein the bearing is a roller bearing.
6. The system as in any preceding clause, wherein the turbine frame assembly includes a low pressure rotor shaft bearing support structure and a bearing rotatably engaged with the aft end portion of the low pressure rotor shaft, wherein the bearing is a roller bearing.
7. The system as in any preceding clause, wherein the turbine frame assembly includes a low pressure rotor shaft bearing support structure and a bearing rotatably engaged with a conical shaft extension coupled to the aft end portion of the low pressure rotor shaft, wherein the bearing is a roller bearing.
8. The system as in any preceding clause, wherein the turbine frame assembly solely supports the aft end portion of the low pressure rotor shaft.
9. The system as in any preceding clause, wherein the fan frame assembly comprises a low pressure rotor shaft bearing support structure and a bearing rotatably engaged with a forward portion of the low pressure rotor shaft, wherein the bearing is one of a thrust bearing or a roller bearing.
10. An indirect-drive turbofan jet engine, comprising:
   a fan section including a plurality of fan blades coupled to a fan shaft;
   a gas turbine engine comprising a low pressure compressor, a high pressure compressor, a combustion section, a high pressure turbine, a low pressure turbine, a high pressure rotor shaft coupling the high pressure compressor to the high pressure turbine, a low pressure rotor shaft coupling the low pressure compressor to the low pressure turbine and a reduction gear coupling a forward end portion of the low pressure rotor shaft to the fan shaft; and
   a fan frame assembly positioned forward of the reduction gear;
   a compressor frame assembly positioned aft of the reduction gear and positioned axially between the low pressure compressor and the high pressure compressor; and
   a turbine frame assembly positioned axially between the high pressure turbine and the low pressure turbine;
   wherein the turbine frame assembly rotatably supports an aft end portion of the high pressure rotor shaft and an aft end portion of the low pressure rotor shaft.
11. The indirect-drive turbofan jet engine as in any preceding clause, wherein the fan frame assembly comprises at least one fan shaft bearing support structure and a bearing rotatably engaged with the fan shaft, wherein the bearing is one of a thrust bearing or a roller bearing.
12. The indirect-drive turbofan jet engine as in any preceding clause, wherein the compressor frame assembly includes a low pressure rotor shaft bearing support structure and a bearing rotatably engaged with a forward portion of the low pressure rotor shaft aft of the reduction gear, wherein the bearing is one of a thrust bearing or a roller bearing.
13. The indirect-drive turbofan jet engine as in any preceding clause, wherein the compressor frame assembly includes a high pressure rotor shaft bearing support structure and a bearing rotatably engaged with a forward portion of the high pressure rotor shaft, wherein the bearing is one of a thrust bearing or a roller bearing.
14. The indirect-drive turbofan jet engine as in any preceding clause, wherein the turbine frame assembly includes a high pressure rotor shaft bearing support structure and a bearing rotatably engaged with the aft end portion of the high pressure rotor shaft.
15. The indirect-drive turbofan jet engine as in any preceding clause, wherein the bearing is a roller bearing.
16. The indirect-drive turbofan jet engine as in any preceding clause, wherein the turbine frame assembly includes a low pressure rotor shaft bearing support structure and a bearing rotatably engaged with the aft end portion of the low pressure rotor shaft, wherein the bearing is a roller bearing.
17. The indirect-drive turbofan jet engine as in any preceding clause, wherein the turbine frame assembly includes a low pressure rotor shaft bearing support structure and a bearing rotatably engaged with a conical shaft extension coupled to the aft portion of the low pressure rotor shaft.
18. The indirect-drive turbofan jet engine as in any preceding clause, wherein the bearing is a roller bearing.
19. The indirect-drive turbofan jet engine as in any preceding clause, wherein the turbine frame assembly solely supports the aft end portion of the low pressure rotor shaft.
20. The indirect-drive turbofan jet engine as in any preceding clause, wherein the fan frame assembly comprises a low pressure rotor shaft bearing support structure and a bearing rotatably engaged with a forward portion of the low pressure rotor shaft, wherein the bearing is one of a thrust bearing or a roller bearing.

## Claims

1. A system for supporting shafts of an indirect-drive turbofan engine (10), the system comprising:
a fan frame assembly (200) coaxially aligned with a centerline of the turbofan engine (10) and positioned forward of a reduction gear (40) of the turbofan engine (10), wherein the reduction gear (40) couples a low pressure rotor shaft (36) to a fan shaft (38);
a compressor frame assembly (300) coaxially aligned with the centerline aft of the reduction gear (40) and positioned axially between a low pressure compressor (22) and a high pressure compressor (24) of the turbofan engine (10); and
a turbine frame assembly (400) coaxially aligned with the centerline and positioned axially between a high pressure turbine (28) and a low pressure turbine (30) of the turbofan engine (10);
wherein the turbine frame assembly (400) rotatably supports an aft end portion of a high pressure rotor shaft (34) and an aft end portion of the low pressure rotor shaft (36).

2. The system as in claim 1, wherein the fan frame assembly (200) comprises at least one fan shaft bearing support structure (210) and a bearing (212) rotatably engaged with the fan shaft (38), wherein the bearing (212) is one of a thrust bearing or a roller bearing.

3. The system as in claim 1 or 2, wherein the compressor frame assembly (300) includes a low pressure rotor shaft bearing support structure (310) and a bearing (314) rotatably engaged with a forward portion (218) of the low pressure rotor shaft (36) aft of the reduction gear (40), wherein the bearing (314) is one of a thrust bearing or a roller bearing.

4. The system as in any of claims 1 to 3, wherein the compressor frame assembly (300) includes a high pressure rotor shaft bearing support structure (320) and a bearing (324) rotatably engaged with a forward portion (326) of the high pressure rotor shaft (34), wherein the bearing (324) is one of a thrust bearing or a roller bearing.

5. The system as in any of claims 1 to 4, wherein the turbine frame assembly (400) includes a high pressure rotor shaft bearing support structure (410) and a bearing (414) rotatably engaged with an aft end portion (416) of the high pressure rotor shaft (34), wherein the bearing (414) is a roller bearing.

6. The system as in any preceding claim, wherein the turbine frame assembly (400) includes a low pressure rotor shaft bearing support structure (418) and a bearing (422) rotatably engaged with the aft end portion (424) of the low pressure rotor shaft (36), wherein the bearing (422) is a roller bearing.

7. The system as in any preceding claim, wherein the turbine frame assembly (400) includes a low pressure rotor shaft bearing support structure (426) and a bearing (430) rotatably engaged with a conical shaft extension (102) coupled to the aft end portion (424) of the low pressure rotor shaft (36), wherein the bearing (430) is a roller bearing.

8. The system as in any preceding claim, wherein the turbine frame assembly (400) solely supports the aft end portion of the low pressure rotor shaft (36).

9. The system as in any preceding claim, wherein the fan frame assembly (200) comprises a low pressure rotor shaft bearing support structure (214) and a bearing (216) rotatably engaged with a forward portion (218) of the low pressure rotor shaft (36), wherein the bearing (216) is one of a thrust bearing or a roller bearing.

10. An indirect-drive turbofan jet engine, comprising:
a fan section (14) including a plurality of fan blades coupled to a fan shaft (38);
a gas turbine engine (16) comprising a low pressure compressor (22), a high pressure compressor (24), a combustion section (26), a high pressure turbine (28), a low pressure turbine (30), a high pressure rotor shaft (34) coupling the high pressure compressor (24) to the high pressure turbine (28), a low pressure rotor shaft (36) coupling the low pressure compressor (22) to the low pressure turbine (30) and a reduction gear (40) coupling a forward end portion of the low pressure rotor shaft (36) to the fan shaft (38); and
the system of any preceding claim.
